# EUROPEAN PATENT APPLICATION

(11) **EP 2 169 620 A1**
(43) Date of publication of application: **31.03.2010**
(21) Application number: 08777598.7
(22) Date of filing: 25.06.2008
(51) Int. Cl.: G06T 7/00, A61B 5/117, G06T 7/60

(54) **CHARACTERISTIC ATTRIBUTE CALCULATION DEVICE, CHARACTERISTIC AMOUNT EXTRACTION DEVICE, PATTERN MATCHING DEVICE, METHOD, AND PROGRAM**

(30) Priority: 27.06.2007 JP 2007169016
(71) Applicant: Nec Corporation, Tokyo 108-8001 (JP)
(72) Inventor: HUANG, Lei, Tokyo 108-8001 (JP)
(74) Representative: Vossius & Partner
(86) International application number: PCT/JP2008/061582
(87) International publication number: WO 2009/001876

(57) **Abstract**

An object of the present invention is to provide an apparatus that can accurately detect the correspondence relation of pattern features even when a pattern is deformed. The apparatus detects a stream line from a pattern signal (S1), sets a stream line coordinate system determined by the stream line (S2), and calculates an attribute of the pattern feature based on the stream line coordinate system (S3).

## Description

### TECHNICAL FIELD

### (CROSS-REFERENCE TO RELATED APPLICATIONS)

The present application claims priority from Japanese Patent Application 2007-169016 (filed on June 27, 2007) the content of which is hereby incorporated in its entirety by reference into this specification.
The present invention relates to a pattern matching technology, and more particularly to a feature attribute calculation apparatus that calculates the attributes of pattern features, a feature extraction apparatus, and a pattern matching apparatus, method, and program.

### BACKGROUND ART

An example (related technology) of a pattern matching apparatus of this type, the reference may be made to the description of Patent Document 1. This pattern matching apparatus, which checks fingerprints, compares each pattern feature (called "feature point" in Patent Document 1) of a first fingerprint (called "search fingerprint" in Patent Document 1) pattern with each pattern feature of a second fingerprint (called "file fingerprint" in Patent Document 1) pattern in terms of local feature data of those pattern features to detect the correspondence relation (called a "pair" in Patent Document 1) of pattern features and to check the identity of fingerprint patterns.

As the local feature data on the pattern feature described above, a location and facing direction of a neighboring pattern feature in the local coordinate system, which is determined by the direction (called "direction" in Patent Document 1) of the pattern feature with the location of the pattern feature as a center, and the number of cross ridges between the pattern feature and the neighboring pattern feature are used.

Patent Document 2 discloses a configuration in which the quality of a fingerprint image is detected by a deviation in the covariance of the local stream line direction of an input image and a reference image. Patent Document 3 discloses a configuration in which intermediate data, represented in a curvilinear coordinate system created along a curved surface of a finger face, is obtained from the fingerprint image data and three-dimensional location data on the finger face and, from the intermediate data, matching data is obtained which is represented in the coordinate system of the virtual plane created by virtually developing the curved surface into a plane.

Patent Document 1:
   Japanese Patent Kokai Publication No. JP-S56-24675A
Patent Document 2:
   Japanese Patent Kokai Publication No. JP2000-057338A
Patent Document 3:
   Japanese Patent Kokai Publication No. JP2006-172258A
Patent Document 4:
   Japanese Patent Kokai Publication No. JP-S55-138174A
Patent Document 5:
   Japanese Patent Kokai Publication No. JP-H08-7097A

### DISCLOSURE OF THE INVENTION

### PROBLEMS TO BE SOLVED BY THE INVENTION

However, the pattern matching apparatus described above has the following problems (The description below is a result of investigation conducted by the inventor of the present invention).

A first problem is that, when a fingerprint texture includes a distortion, local feature data, such as location and facing direction of a neighboring pattern feature represented in a local coordinate system with each pattern feature positioned at a center thereof, includes a variation generated by the distortion of a texture.

A second problem is that the correspondence relation between pattern features cannot sometimes be detected accurately. That is, because the local feature data described above includes a variation generated by a texture deformation, a threshold that allows for a large variation must be set to detect the correspondence relation between pattern features through comparison of the local feature data described above. However, setting a threshold that allows for a large variation deteriorates the detection accuracy of the correspondence relation between pattern features with the result that the correspondence relation between pattern features cannot be detected accurately.

A third problem is that, when the identity matching of fingerprint patterns is performed based on the pattern feature correspondence relation detected by setting the above-described threshold that allows for a large variation, the differentiation between similar fingerprints becomes difficult and, as a result, the identification accuracy may be decreased.

Therefore, it is an object of the present invention to provide an apparatus, a method, and a program in which, even if a pattern is deformed, the effect of the deformation can be suppressed to allow for derivation of an attribute of a pattern feature.

It is another object of the present invention to provide an apparatus in which, even if a pattern is deformed, the effect of the deformation can be suppressed to allow for extraction of the relative relation between attributes of pattern features.

It is still another object of the present invention to provide an apparatus in which, even if a pattern is deformed, the effect of the deformation can be suppressed to allow for detection of the correspondence relation between pattern features.

### MEANS TO SOLVE THE PROBLEMS

To solve one or more of the problems described above, the invention disclosed in this application may be summarized as follows.

In one aspect of the present invention, there is provided an apparatus (feature attribute calculation apparatus) that calculates an attribute of a pattern feature in a stream line coordinate system, determined according to the distribution of directions of texture streams (texture streams along the directions of ridges lines and valley lines in case of a finger print and/or a palm print), in a pattern signal and, in particular, calculates a location and an orientation of a pattern feature in the stream line coordinate system.

In the present invention, a feature attribute calculation apparatus comprises a means that inputs a pattern signal and detects a stream line in the pattern signal; a means that sets a stream line coordinate system having a coordinate axis corresponding to a direction of the detected stream line; and a means that derives an attribute (feature data) of a pattern feature in the pattern signal based on the stream line coordinate system.

In the present invention, the attribute of a pattern feature includes at least one of a location of the pattern feature in the stream line coordinate system and an orientation of the pattern feature in the stream line coordinate system.

In the present invention, for a plurality of different points on the stream line in the pattern signal, the means that sets a stream line coordinate system may set a plurality of local stream line coordinate systems, each corresponding to a direction of the stream line at each of the plurality of points, and configures the stream line coordinate system using a collection of the plurality of local stream line coordinate systems.

In the present invention, the means that sets a stream line coordinate system may determine a stream direction of the stream line in the pattern signal as a direction of a tangent line of one of coordinate axes of the stream line coordinate system.

In the present invention, the means that sets a stream line coordinate system may determine an axis, which is parallel to a stream direction of the stream line in the pattern signal, as one of coordinate axes of the stream line coordinate system.

In the present invention, the means that sets a stream line coordinate system may find a stream line that passes through a pattern feature based on a distribution of texture stream directions in the pattern signal and determines the stream line as one of coordinate axes of the stream line coordinate system.

In the present invention, the means that sets a stream line coordinate system may set the stream line coordinate system based on an orientation of the pattern feature.

In the present invention, the means that detects a stream line may detect the stream line based on a distribution of stream directions determined by signals of a localized area included in the pattern signal.

In the present invention, the means that detects a stream line repeatedly may perform an operation, in which a predetermined amount of movement is made from a location of a predetermined pattern feature in the pattern signal into a facing direction of the stream, a facing direction at a new location is determined so that the facing direction at the new location is continuous with the facing direction of the stream at the location before the movement, and a predetermined amount of movement is made from the new location into the newly determined facing direction to determine a next facing direction, thereby determining a location and a direction of the stream line that passes through the predetermined pattern feature.

In the present invention, the pattern signal may include a fingerprint and/or palm print and that the pattern feature may include a fine structure of a fingerprint and/or palm print. In addition, the present invention may be used for an attribute calculation, extraction, and matching of pattern features, such as various types of texture patterns and contour line patterns.

An apparatus (feature extraction apparatus) according to another aspect of the present invention, extracts, for a plurality of pattern features, a relative relation of attributes, which are calculated by the feature attribute calculation apparatus, as a feature quantity. For example, a relation of locations or a relation of orientations between pattern features in the stream line coordinate system may be used as a feature quantity.

In the present invention, the relative relation of attributes of the plurality of pattern features may include at least one of:
a location of another pattern feature viewed from one pattern feature in a stream line coordinate system;
a shift in an orientation of another pattern feature viewed from one pattern feature in a stream line coordinate system;
a distance of another pattern feature viewed from one pattern feature in a stream line coordinate system; and
a direction of another pattern feature viewed from one pattern feature in a stream line coordinate system.

In the present invention, the relative relation of attributes of the plurality of pattern features may be a location of another pattern feature viewed from one pattern feature in a stream line coordinate system and, with one pattern feature on a coordinate axis, the location is calculated based on a distance of another pattern feature measured on the coordinate axes.

In the present invention, the relative relation of attributes of the plurality of pattern features may be a shift in an orientation of another pattern feature viewed from one pattern feature in a stream line coordinate system and, with one pattern feature on a coordinate axis, the shift in the orientation is calculated based on a shift in the orientation of another pattern feature measured on the coordinate axes.

In the present invention, the relative relation of attributes of the plurality of pattern features may be a distance of another pattern feature viewed from one pattern feature in a stream line coordinate system and, with one pattern feature on a coordinate axis, the distance is calculated based on a distance of another pattern feature measured on the coordinate axes.

In the present invention, the relative relation of attributes of the plurality of pattern features may be a direction of another pattern feature viewed from one pattern feature in a stream line coordinate system and, with one pattern feature on a coordinate axis, the direction is calculated based on a distance of another pattern feature measured on the coordinate axes.

In the present invention, there is provided a feature attribute calculation apparatus comprising: a feature detection unit that detects locations and facing directions of pattern features, which are features of texture, from an input pattern signal; a direction detection unit that, for a point in the input pattern signal, detects a main direction of the point using peripheral pattern information on the point; a stream line detection unit that, for each of the detected pattern features, detects a location and a facing direction of a stream line passing through the pattern feature using information on a location and a facing direction of the pattern feature and information on the main direction of each point in the input pattern signal; and a stream line relation detection unit that, for each of the detected pattern features, finds a projection point of the pattern feature onto a stream line axis of another pattern feature, wherein the pattern feature and a stream line feature passing through the pattern feature are set respectively as an origin and an axis of a local stream line coordinate system, and detects information on a location and a facing direction of the another pattern feature in the local stream line coordinate system as a stream line relation that is an attribute of the pattern feature.

An apparatus (pattern feature correspondence apparatus) in still another aspect of the present invention detects the correspondence relation of pattern features based on the attributes of pattern features in the stream line coordinate system calculated by the feature attribute calculation apparatus or the relative relation of attributes in the stream line coordinate system extracted by the feature extraction apparatus.

In the present invention, a stream line relation of pattern features is obtained by means of the feature attribute calculation apparatus. pattern The pattern feature correspondence may include: a search feature storage unit that stores data group, each including a pattern feature that is a search feature and a stream line relation; a file feature storage unit that stores data group, each including a pattern feature that is a file feature and a stream line relation; and a pair checking unit that sequentially reads pattern feature data from the search feature storage unit and the file feature storage unit and compares relative locations and facing directions in relation to another pattern feature, which corresponds to the stream line relation, to detect pairs of pattern features from the pattern features stored in the search feature storage unit and the pattern features stored in the file feature storage unit.

An apparatus (pattern matching apparatus) in still another aspect of the present invention checks the matching between first pattern signals and second pattern signals using the attributes of pattern features in the stream line coordinate system calculated by the feature quantity calculation apparatus or the correspondence relation of pattern features detected based on the relative relation of the attributes in the stream line coordinate system extracted by the feature extraction apparatus.

In the present invention, a stream line relation of a pattern feature is obtained by means of the feature attribute calculation apparatus. The pattern matching apparatus may include: a search feature storage unit that stores data group, each including a pattern feature that is a search feature and a stream line relation; a file feature storage unit that stores data group, each including a pattern feature that is a file feature and a stream line relation; a pair checking unit that sequentially reads pattern feature data from the search feature storage unit and the file feature storage unit and compares relative locations and facing directions in relation to another pattern feature, which corresponds to the stream line relation, to detect pairs of pattern features from the pattern features stored in the search feature storage unit and the pattern features stored in the file feature storage unit; a pair feature storage unit that stores data on the paired pattern features detected by the pair checking unit; and a match checking unit that checks data on the paired pattern features stored in the pair feature storage unit, or data on the paired pattern features and the pattern feature data stored in the search feature storage unit and the file feature storage unit, to check if a pattern match occurs.

A method of the present invention comprises
a step of inputting a pattern signal and detecting a stream line in the pattern signal;
a step of setting a coordinate system (termed as a stream line coordinate system) corresponding to a direction of the detected stream line; and
a step of obtaining an attribute of a pattern feature in the pattern signal based on the stream line coordinate system.

In the method of the present invention, for a plurality of different points on the stream line in the pattern signal,
the step of setting a stream line coordinate system configures a plurality of local stream line coordinate systems, one for each, and sets the stream line coordinate system using the plurality of local stream line coordinate systems.

In the method of the present invention,
the step of detecting a stream line repeatedly performs an operation, in which a predetermined amount of movement is made from a location of a predetermined pattern feature (feature point, singular point) in the pattern signal into a facing direction of the stream, a facing direction at a new location is determined so that the facing direction at the new location is continuous with the facing direction of the stream at the location before the movement, and a predetermined amount of movement is made into the newly determined facing direction to determine a next facing direction, thereby determining a location and a direction of the stream line that passes through the predetermined pattern feature.

A method of the present invention comprises
a feature detection step of detecting a location and a facing direction of a pattern feature, which is a texture feature, from an input pattern signal;
a direction detection step of, for a point in the input pattern signal, detecting a main direction of the point using peripheral pattern information on the point;
a stream line detection step of, for each of the detected pattern features, detecting a location and a facing direction of a stream line passing through the pattern feature using information on a location and a facing direction of the pattern feature and information on the main direction of each point in the input pattern signal; and
a stream line relation detection step of, for each of the detected pattern features, finding a projection point of the pattern feature onto a stream line axis of another pattern feature wherein the pattern feature and a stream line passing through the pattern feature are set respectively as an origin and an axis of a local stream line coordinate system and detecting information on a location and a facing direction of the another pattern feature in the local stream line coordinate system as a stream line relation that is an attribute of the pattern feature.

A computer program in the present invention is a program causing a computer to execute
a processing that inputs a pattern signal and detects a stream line in the pattern signal;
a processing that sets a coordinate system (termed as a stream line coordinate system) corresponding to a direction of the detected stream line; and
a processing that obtains an attribute of a pattern feature in the pattern signal based on the stream line coordinate system.

In addition to the invention of the methods and the invention of the program described above, the present invention provides inventions of methods and inventions of programs corresponding to the inventions of the apparatuses in the aspects described above.

### EFFECT OF THE INVENTION

According to the present invention, even when a pattern is deformed, the effect of the deformation can be suppressed, and the calculated pattern feature attribute may include smaller variations.

According to the present invention, even when a pattern is deformed, the effect of the deformation can be suppressed and the extracted relative relation of the pattern feature attribute may include smaller variations.

According to the present invention, even when a pattern is deformed, the effect of the deformation can be suppressed and the correspondence relation of pattern features can be detected accurately. According to the present invention, pattern identity can be checked accurately even when the pattern is deformed.

### BRIEF DESCRIPTION OF THE DRAWINGS

Fig. 1 is a diagram showing how to measure relative locations among locations in a coordinate curved line network.
FIGS. 2A and 2B are partially enlarged diagrams showing fingerprint texture to indicate a local stream line coordinate system determined by a stream line.
Fig. 3 is a diagram showing the configuration of a first example of the present invention.
Fig. 4 is a diagram showing the configuration of a second example of the present invention.
Fig. 5 is a diagram showing the configuration of a third example of the present invention.
Fig. 6 is a flowchart showing a method according to the present invention.

### EXPLANATIONS OF SYMBOLS

10 Feature detection unit
20 Direction detection unit
30 Stream line detection unit
40 Stream line relation detection unit
50,51 Search feature storage unit
60,61 File feature storage unit
70,71 Pair checking unit
80 Pair feature storage unit
90 Match checking unit

### PREFERRED MODES FOR CARRYING OUT THE INVENTION

The present invention described above will be described more in detail. For use in recognizing two or higher-dimensional pattern signals such as those of fingerprints and palm prints or maps and characters, the present invention provides an apparatus that checks the identity of texture, composed of texture patterns, with the use of pattern features and also provides an apparatus, a method, and a program that are conveniently used for encoding a pattern feature (texture feature) used for the checking apparatus described above.

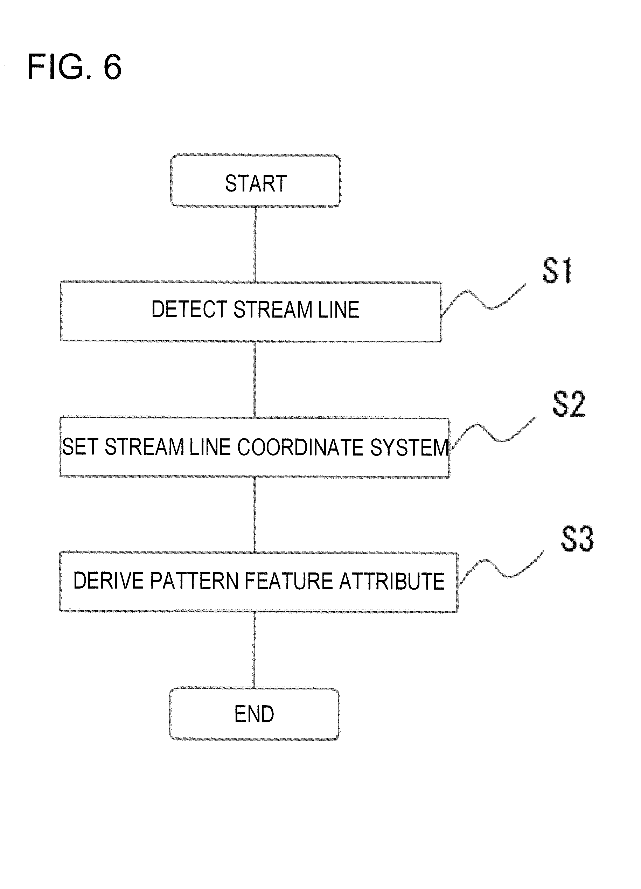

The present invention comprises:
a step of inputting pattern signals and detecting a stream line in the pattern signal (S1 in Fig. 6);
a step of setting a coordinate system (stream line coordinate system) corresponding to the direction of the stream line detected in the pattern signal (S2 in Fig. 6); and
a step of obtaining an attribute of a pattern feature in the pattern signal based on the stream line coordinate system (S3 in Fig. 6). The present invention provides an apparatus comprising a means that executes the steps (S1 to S3) given above. The present invention also provides a program that causes a computer to execute the processing of the steps (S1 to S3) given above.

The present invention introduces a coordinate system (stream line coordinate system) in which the attribute of a pattern feature is not changed, or is least affected, even if there is a deformation in the pattern feature. The coordinate system has been fixed in pattern feature matching, whereas the present invention provides an entirely new method that adjusts the coordinate system to the feature of a pattern that may be subjected to deformation and, after that, acquires feature data.

In the present invention, the location and the orientation of a pattern feature in the pattern signal are measured based on the relation with the texture stream (stream line) determined by the texture in the pattern signal. If calculated based on a stream line coordinate system determined by the stream of texture, the attribute of a pattern feature and the relative relation of the attributes between pattern features tend to have a small variation even if the pattern is deformed. The present invention uses a stream line coordinate system, which is determined by the stream (stream line) of texture included in a pattern signal, to suppress the effect of the deformation, even if the pattern is deformed and thereby accurately detects the attribute of a pattern feature and the correspondence relation. For this reason, the present invention ensures accurate pattern identification, even if a pattern is deformed.

First, referring to the drawings, the following describes a feature extracted in the present invention and some points to be considered when extracting a feature. Though not limited thereto, the following describes a fingerprint image as an example of image information to be processed. It should be noted that the present invention is applicable not only to a fingerprint image but also to any pattern signals.

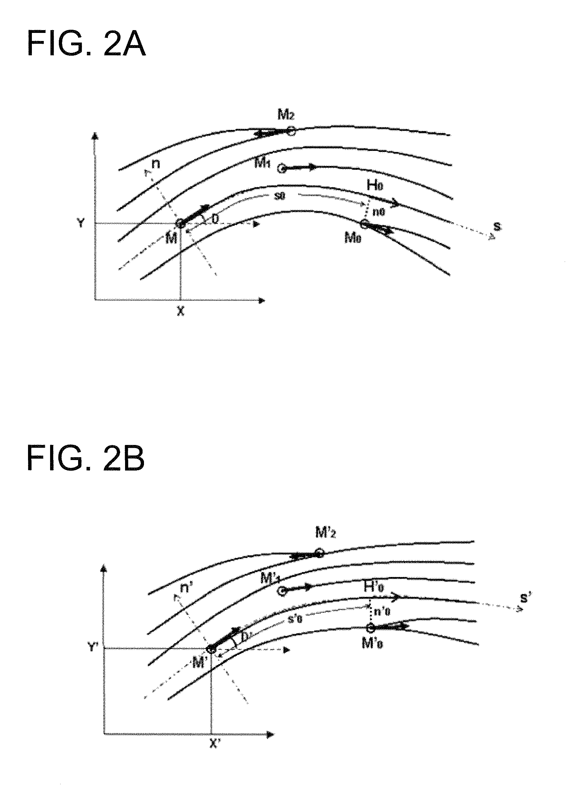

Fig. 2A and Fig. 2B are partially enlarged diagrams schematically illustrating fingerprint pattern as an example of a striped pattern. Fig. 2B shows a pattern when the pattern shown in Fig. 2A undergoes a distortion.

Fig. 2A shows an alternating pattern composed of the black-and-white image of a fingerprint where a ridge displayed in black and a valley line displayed in white appear alternately.

The pattern of ridges of a fingerprint pattern includes many fine structures, that is, pattern features, such as the ridge end points M and M1 and the ridge bifurcation points M0 and M2, are present in different points. A ridge end point and a bifurcation point each are also referred to as a minutia.

As for one particular pattern feature M (which is a ridge end point in this example), the location coordinates (X,Y) of the point and its facing direction D are determined as shown in the figure.

In case of a pattern feature such as the ridge bifurcation M0, its facing direction is determined uniquely as the facing direction to the ridge end point of the valley line.

In general, for a striped pattern such as a fingerprint pattern, the direction is determined for each point according to the stream direction of neighboring texture patterns. In this specification, this direction is defined as a main direction of the point.

When the distribution of the main directions in such pattern signals are to be regarded as a continuous, smooth vector field, there is defined a curved line, each point of which has a main direction parallel to a tangential line of the stream. In this specification, the curved line representing the stream of this texture is defined as a stream line.

Unlike a ridge line and a valley line of a fingerprint, the stream line is **characterized in that** it is not directly recognized visually but is uniquely determined by the texture of a pattern.

On the other hand, once the main direction at each point is determined in a two-dimensional pattern, the direction orthogonal (vertical) to the main direction is also determined. As a result, the normal line orthogonal to the stream line is also determined.

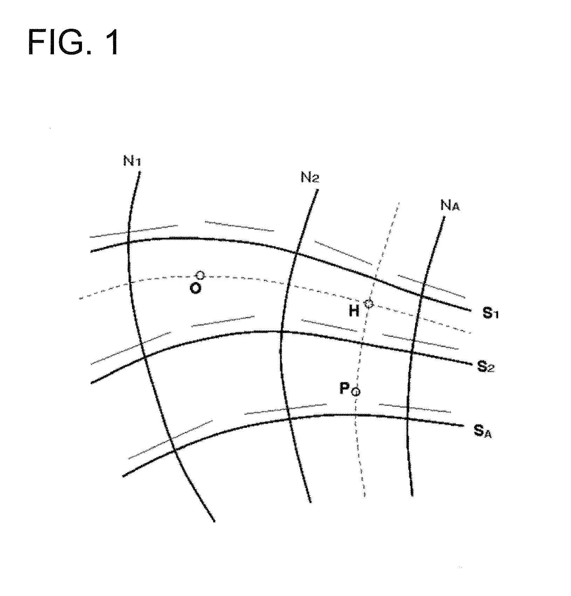

Fig. 1 shows an example of a group (family) of stream curved lines, S₁, S₂, and S_{A} in a general two-dimensional pattern and an example of a group (family) of normal curved lines N₁, N₂, and N_{A} orthogonal to the stream lines.

In this specification, the coordinate system is defined as follows. That is, the coordinate system determined by a curved line group which includes stream curved lines and normal curved lines that are uniquely determined by the distribution in stream directions of the texture and that are orthogonal each other, is defined on a striped pattern, which may be subjected to deformation, as a stream line coordinate system (also called "natural coordinate system") of the pattern. Those curved lines are termed as a "coordinate curved line group", and the attribute, such as the location and orientation of each point in a pattern in the stream line coordinate system, is determined by the relation between the point and each coordinate curved line.

In addition, the relation between different points in a pattern is defined as follows. For example, the location of the point P relative to the point O is determined, as shown in Fig. 1, by a distance between the point P and the point H on the normal curved line and a distance between the point O and the point H on the stream curved line.

In the above description, the point H is an intersection point of the stream line passing through the point O and the normal line passing through the point P.

In general, because a main direction at each point of a striped pattern cannot be determined uniquely, a facing direction of the stream line family cannot be determined uniquely.

In this specification, when measuring relative relation of the location or orientation between pattern features, one pattern feature is used as a reference and the facing direction of a stream line passing through the pattern feature based on the orientation of the pattern feature is determined, and then the facing direction of another stream line and the normal line are determined. In this way, the local stream line coordinate system of the base pattern feature is determined.

If a particular pattern feature (for example, a singular point such as a core feature or a delta feature of a fingerprint) is included in a pattern and the particular pattern feature can be detected stably, a global stream line coordinate system with the particular pattern feature as a reference may also be defined for the pattern signal. In this case, the location relation or the orientation relation of another pattern feature with that of the base pattern feature in the stream line coordinate system is the attribute of each pattern feature. In general, as compared with a global stream line coordinate system, multiple local stream line coordinate systems, where each of multiple pattern features is used as the base, increase the possibility of extracting the feature of the relative relation of attributes between pattern features even when the pattern signal include unclear areas. In addition, when multiple local stream line coordinate systems are used, the feature quantity in a stream line coordinate system can be extracted in a simple configuration without having to consider the complex global location relation between stream line families.

In addition, a stream line coordinate system may be set in such a way that a plurality of local stream line coordinate systems are set, one for each, for a plurality of different points on a stream line in the pattern signal and a global coordinate system is configured by the plural local stream line coordinate systems.

In the example shown in Fig. 2A, the stream line s passing through the pattern feature M is drawn with the pattern feature M as a reference. In this example, the facing direction of (each point on) the stream line s is determined to match the facing direction of the pattern feature M. Once the facing direction of the stream line s is determined, the facing direction of the normal line orthogonal to the stream line s is also determined. In Fig. 2A, the normal line n passing through the pattern feature M and its facing direction are drawn.

As described above, in the present invention, the relation of the location and the orientation between pattern features on a pattern subjected to deformation, is measured in a stream line coordinate system that is uniquely defined based on the stream line inherent in the pattern.

Referring to the example in Fig. 2A, the following describes the stream line coordinate of a pattern feature in detail.

In Fig. 2A, the stream line coordinate system is shown in which the pattern feature M is the central feature and the stream line s is the central stream line. The stream line coordinates of a pattern feature M₀ is defined as follows in relation to the central feature M.

An intersection point of the normal curved line passing through M₀ and the central stream line s is indicated by a projection point H₀,
a signed distance between M₀ and H₀ on the normal curved line is indicated by no,
a signed distance between M and H₀ on the stream curved line is indicated by s₀, and
(S₀,h₀) is a location coordinate of M0 in the stream line coordinate system.

Preferably, the signed distance s₀ has a positive sign if the facing direction from the central feature M to H₀ matches the facing direction of the stream line s, and has the negative sign if they do not match.

In this example, the facing direction of M₀ in the stream line coordinate system may also be defined as the difference between facing directions of M₀ and H₀.

Although an example of a fingerprint pattern has been described, there are not so many pattern features of the type such as ridge end points and ridge bifurcations in a general striped pattern, for example, in map data.

However, for such a general pattern, the location of a high-curvature part of a texture curve may be extracted and its facing direction may be defined.

The present invention is applicable also to a pattern, such as map data, when a structure of a high-curvature part of a texture curve is regarded as a pattern feature.

### EXAMPLES

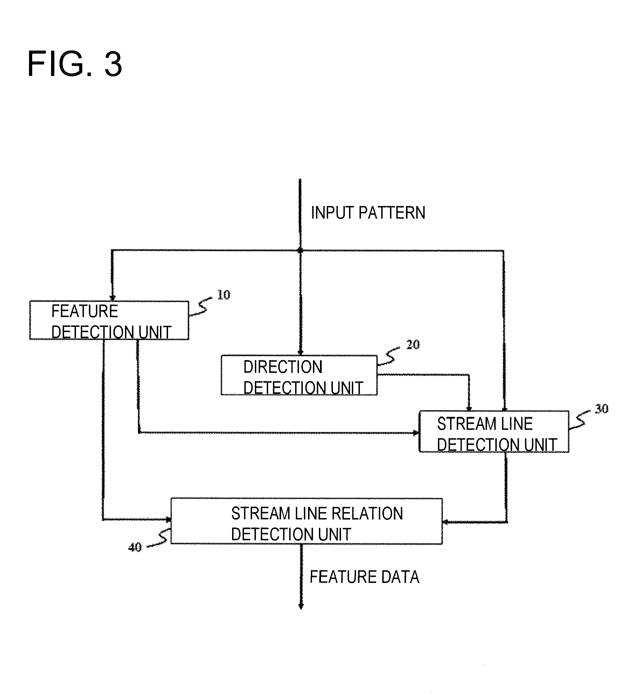

Next, as an example of the present invention, the following describes an example of a feature attribute calculation apparatus that encodes a pattern feature. Fig. 3 is a diagram showing the configuration of a first example of the present invention. Referring to Fig. 3, the feature attribute calculation apparatus (pattern feature encoding apparatus) of this example comprises a feature detection unit 10, a direction detection unit 20, a stream line detection unit 30, and a stream line relation detection unit 40. The general operation of those components is as follows.

The feature detection unit 10 detects locations and facing directions of pattern features, which are the features of texture, from an input pattern.

The direction detection unit 20 detects, for each point on the input pattern, the main direction of the point using the peripheral pattern information on the point.

The stream line detection unit 30 detects, for each of the detected pattern features, a stream line feature passing through the pattern feature and the facing direction of the stream line feature, using the information on the location and the facing direction of the pattern feature and the distribution information on the main directions of the points in the input pattern.

The stream line relation detection unit 40 finds, for each of the detected pattern features, the projection point of another pattern feature on the stream line axis where the pattern feature and the stream line feature passing through the pattern feature are the origin and the axis of the stream line coordinate system respectively, and detects the information on the location and the facing direction of the other pattern feature in the stream line coordinate system as a stream line relation that is a pattern feature.

Next, referring to Fig. 3, the following describes the components of this example in detail. The feature detection unit 10 detects the locations and the facing directions of pattern features that are the features of texture obtained from an input pattern. An example of the method for detecting the location and the facing direction of a pattern feature of a striped pattern is described, for example, in Patent Document 4.

The direction detection unit 20 detects the local stream direction at each point in the input pattern. An example of the method for detecting the main direction, which is the local stream direction of a striped pattern, is described, for example, in Patent Document 5.

The stream line detection unit 30 detects a stream line that passes through a pattern feature. A stream line is detected as follows. For example, starting at the location of the pattern feature described above, a slight movement is made in the facing direction or in opposite direction of the facing direction of the pattern feature, the facing direction of the main direction of the new location is determined at the new location by referencing the facing direction of the location before the movement and through the continuity of the facing direction and, after that, a slight movement is made further in the new facing direction that is determined. By repeating this operation, the location and the facing direction of the stream line is determined.

The stream line relation detection unit 40 detects a stream line relation of a pattern feature.

At least one of the following is used as the stream line relation.
- Location of another pattern feature viewed from one pattern feature in the stream line coordinate system
- Shift in the orientation of another pattern feature viewed from one pattern feature in the stream line coordinate system
- Distance of another pattern feature viewed from one pattern feature in the stream line coordinate system
- Direction of another pattern feature viewed from one pattern feature in the stream line coordinate system

For example, a stream line relation is detected as follows.
- Using a pattern feature and the stream line of a stream passing through the pattern feature respectively as the origin and the coordinate axis of the stream line coordinate system, find the projection point of another pattern feature on the coordinate axis.
- Calculate the signed distance no between the other pattern feature and the projection point of the other pattern feature on the coordinate axis as described above by referring to Fig. 2A.
- In addition, calculate the signed distance so between the projection point of the other pattern feature on the coordinate axis and the origin.
- Then, (so,no) is the stream line relation of the other pattern feature.

Alternatively, the difference in the facing direction between the other pattern feature and the projection point of the other pattern feature on the coordinate axis may also be used as the stream line relation of the other pattern feature.

In addition, using the location coordinates (so,no) in the stream line coordinate system, the distance between the origin and another pattern feature in the facing direction, as well as the direction, may also be determined.

To make the calculation easier, the signed distance no between the other pattern feature and the projection point may be the shortest straight line distance between M₀ and the stream line s instead of the distance on the normal curved line.

It is desirable that the stream line relation be detected for multiple neighboring pattern features.

The stream line relation data detected by the stream line relation detection unit 40 is output to a storage apparatus. For example, the stream line data may be stored in an external storage apparatus, such as a hard disk or a flash memory disk, in a predetermined format.

The processing and the function of the feature detection unit 10, direction detection unit 20, stream line detection unit 30, and stream line relation detection unit 40 shown in Fig. 3 may be implemented by programs running on a computer.

In Fig. 3, an apparatus (feature extraction apparatus) is configured which outputs relative relation of attributes of pattern features as a feature quantity using stream line relation data received from the stream line relation detection unit 40. That is, at least one of the location, orientation, distance, and direction between pattern features in the stream line coordinate system is output as the relative relation of the attributes of pattern features.

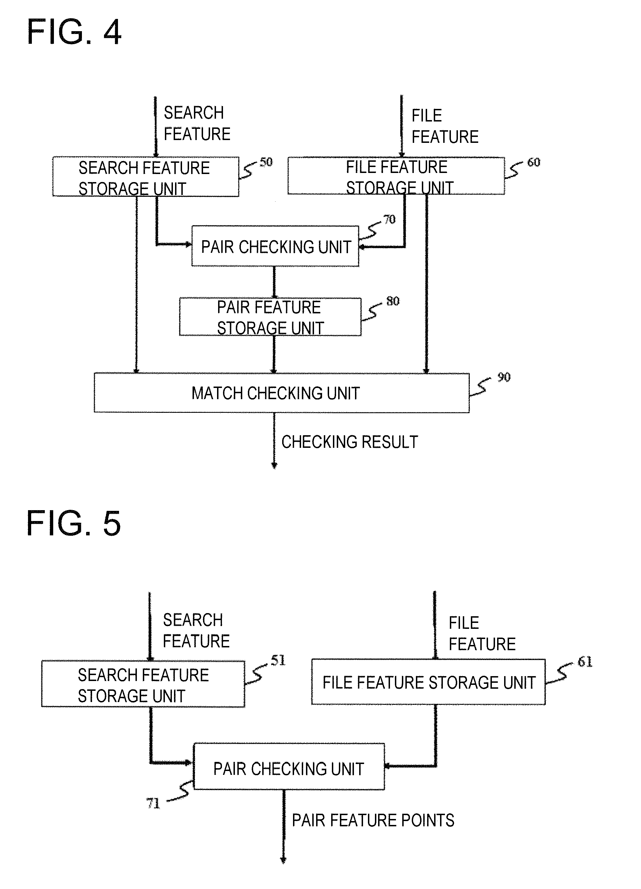

Fig. 4 is a diagram showing the configuration of a second example of the present invention. Referring to Fig. 4, a pattern matching apparatus of this example comprises a search feature storage unit 50, a file feature storage unit 60, a pair checking unit 70, a pair feature storage unit 80, and a match checking unit 90. The general operation of those components is as follows.

The search feature storage unit 50 stores pattern features (search features) detected in a pattern to be searched and stream line relation data on the pattern features. The stream line relation data on the pattern features stored in the search feature storage unit 50 is calculated by the stream line relation detection unit 40 shown in Fig. 3.

The file feature storage unit 60 stores file features (pattern features to be matched with search features) and data on the stream line relation features. The stream line relation data on the file features, stored in the file feature storage unit 60, is calculated by the stream line relation detection unit 40 in Fig. 3 for use as the reference of pattern matching.

The pair checking unit 70 sequentially reads pattern feature data from the search feature storage unit 50 and the file feature storage unit 60 and compares the stream line relation features, such as the relative locations and the facing directions in relation to other pattern features, to detect pairs of pattern features from the pattern features stored in the search feature storage unit 50 and the pattern features stored in the file feature storage unit 60.

An example of the method for comparing the stream line relation features is as follows. For a combination of all pattern features in the search feature storage unit 50 and all pattern features in the file feature storage unit 60, the difference in the stream line relations is compared with a predetermined threshold and, if the difference is equal to or smaller than the threshold, the combination of pattern features may be detected as a "pair".

The pair feature storage unit 80 stores data on the paired pattern features detected by the pair checking unit 70.

The match checking unit 90 checks data on the paired pattern features stored in the pair feature storage unit 80 and data on the pattern features stored in the search feature storage unit 50 and the file feature storage unit 60 to check if a pattern match occurs. For example, a score (such as m/max{nl,n2}) is derived from the number of paired pattern features (m) stored in the pair feature storage unit 80 and the number of pieces of pattern feature data (n1,n2) stored in the search feature storage unit 50 and the file feature storage unit 60. If the resulting score exceeds a predetermined threshold, it is possible to judge that a pattern match occurs. It is also possible to determine whether matching is to be performed based on the number of paired pattern features (m). Various methods are proposed for detecting pattern features to be paired and for checking if a pattern match occurs. For example, the method described in Patent Document 1 may be used.

When the apparatus in this example is used for a fingerprint matching system (security management system), the checking result of the match checking unit 90 is used for controlling the entrance and exit of a building or the entrance and exit of an area within a building.

In this example, stream line relations are used to detect the correspondence relation between pattern features. And so, even if a pattern is deformed, for example, from the state in Fig. 2A to the state shown in Fig. 2B, the variation between the stream line coordinates (so,no) of the pattern feature M₀ in Fig. 2A and the stream line coordinates (s'₀,n'₀) of the pattern feature M'0 in Fig. 2B is small and, as a result, the correspondence pattern features are detected accurately. This results in high-accuracy pattern matching.

The processing and the function of the pair checking unit 70 and the match checking unit 90 shown in Fig. 4 may be implemented by programs running on a computer.

Next, the following describes a pattern feature correspondence apparatus of the present invention. Fig. 5 is diagram showing the configuration of a third example of the present invention. Referring to Fig. 5, this pattern feature correspondence apparatus comprises a search feature storage unit 51, a file feature storage unit 61, and a pair checking unit 71. The operation of those units is the same as that of the search feature storage unit 50, file feature storage unit 60, and pair checking unit 70, shown in Fig. 4, respectively. That is, the pair checking unit 71 sequentially reads pattern feature data from the search feature storage unit 51 and the file feature storage unit 61 and compares the stream line relation features, such as the relative locations and the facing directions in relation to other pattern features, to detect pairs of pattern features.

The present invention is applicable to such applications as personal identification, identity checking, and crime suspect search though finger/palm pattern matching.

The present invention is applicable also to road traffic information analysis through matching between aerial images and map data.

In addition, the present invention is applicable to such applications as aircraft posture control through geographical pattern matching. In addition, the present invention is applicable also to such applications as character pattern recognition. In addition, the present invention is applicable also to calculation of the attribute of a pattern feature and pattern matching of image data used in CT(Computer Tomography), MRI(Magnetic Resonance Imaging), thermography, and ultrasound measurement (diagnosis).

The disclosures of Patent Documents given above are hereby incorporated by reference into this specification. The embodiment and the examples may be changed and adjusted in the scope of the entire disclosure (including claims) of the present invention and based on the basic technological concept. In the scope of the claims of the present invention, various disclosed elements may be combined and selected in a variety of ways. That is, it is to be understood that the present invention includes various modifications and changes that may be made by those skilled in the art based on the entire disclosure including the claims and the technological concepts.

## Claims

1. A feature attribute calculation apparatus comprising:
a means that inputs a pattern signal and detects a stream line in the pattern signal;
a means that sets a coordinate system(termed as a stream line coordinate system) corresponding to a direction of the detected stream line in the pattern signal; and
a means that derives an attribute of a pattern feature in the pattern signal based on the stream line coordinate system.

2. The feature attribute calculation apparatus according to claim 1, wherein the attribute of a pattern feature include at least one of:
a location of the pattern feature in the stream line coordinate system; and
an orientation of the pattern feature in the stream line coordinate system.

3. The feature attribute calculation apparatus according to claim 1 or 2, wherein, for a plurality of different points on the stream line in the pattern signal, the means that sets a stream line coordinate system sets a plurality of local stream line coordinate systems, each corresponding to a direction of the stream line at each of the plurality of points, and configures the stream line coordinate system, using a collection of the plurality of local stream line coordinate systems.

4. The feature attribute calculation apparatus according to claim 1 or 2, wherein the means that sets a stream line coordinate system determines a stream direction of the stream line in the pattern signal as a direction of a tangential line of one of coordinate axes of the stream line coordinate system.

5. The feature attribute calculation apparatus according to claim 1 or 2, wherein the means that sets a stream line coordinate system determines an axis, which is parallel to a stream direction of the stream line in the pattern signal, as one of coordinate axes of the stream line coordinate system.

6. The feature attribute calculation apparatus according to claim 1 or 2, wherein the means that sets a stream line coordinate system finds a stream line that passes through a pattern feature based on a distribution of texture stream directions in the pattern signal and determines the stream line as one of coordinate axes of the stream line coordinate system.

7. The feature attribute calculation apparatus according to claim 1 or 2, wherein the means that sets a stream line coordinate system sets the stream line coordinate system based on an orientation of the pattern feature.

8. The feature attribute calculation apparatus as set forth in one of claims 1 to 7, wherein the means that detects a stream line detects the stream line based on a distribution of stream directions determined by signals of a localized area included in the pattern signal.

9. The feature attribute calculation apparatus as set forth in one of claims 1 to 7, wherein the means that detects a stream line repeatedly performs an operation, in which a predetermined amount of movement is made from a location of a predetermined pattern feature in the pattern signal, to a facing direction of the stream,
a facing direction at a new location is determined so that the facing direction at the new location is continuous with the facing direction of the stream at the location before the movement, and
a predetermined amount of movement is made from the new location to the newly determined facing direction to determine a next facing direction, thereby determining a location and a direction of the stream line that passes through the predetermined pattern feature.

10. The feature attribute calculation apparatus as set forth in one of claims 1 to 9, wherein the pattern signal include
a fingerprint and/or a palm print, and
the pattern features include
a fine structure of a fingerprint and/or a palm print.

11. A feature extraction apparatus that extracts a pattern feature, wherein for a plurality of pattern features, the feature extraction apparatus extracts a relative relation of attributes of pattern features as a feature quantity, the pattern feature attribute each being calculated by the feature attribute calculation apparatus as set forth in one of claims 1 to 10.

12. The feature extraction apparatus according to claim 11, wherein the relative relation of attributes of the plurality of pattern features includes at least one of:
a location of another pattern feature viewed from one pattern feature in a stream line coordinate system;
a shift in an orientation of another pattern feature viewed from one pattern feature in a stream line coordinate system;
a distance of another pattern feature viewed from one pattern feature in a stream line coordinate system; and
a direction of another pattern feature viewed from one pattern feature in a stream line coordinate system.

13. The feature extraction apparatus according to claim 11, wherein the relative relation of attributes of the plurality of pattern features is a location of another pattern feature viewed from one pattern feature in a stream line coordinate system, and
with one pattern feature on a coordinate axis of the stream line coordinate system, the apparatus calculates the location based on a distance of another pattern feature measured on the coordinate axe.

14. The feature extraction apparatus according to claim 11, wherein the relative relation of attributes of the plurality of pattern features is a shift in an orientation of another pattern feature viewed from one pattern feature in a stream line coordinate system, and
with one pattern feature on a coordinate axis of the stream line coordinate system, the apparatus calculates the shift in the orientation based on a shift in the orientation of another pattern feature measured on the coordinate axis.

15. The feature extraction apparatus according to claim 11, wherein the relative relation of attributes of the plurality of pattern features is a distance of another pattern feature viewed from one pattern feature in a stream line coordinate system, and
with one pattern feature on a coordinate axis of the stream line coordinate system, the apparatus calculates the distance based on a distance of another pattern feature measured on the coordinate axis.

16. The feature extraction apparatus according to claim 11, wherein the relative relation of attributes of the plurality of pattern features is a direction of another pattern feature viewed from one pattern feature in a stream line coordinate system and
with one pattern feature on a coordinate axis of the stream line coordinate system, the apparatus calculates the direction based on a distance of another pattern feature measured on the coordinate axis.

17. A pattern feature correspondence apparatus, wherein, for one or more pattern features included in a pattern signal,
the pattern feature correspondence apparatus detects a correspondence relation of the pattern features based on attributes, the attributes each being calculated by the feature attribute calculation apparatus as set forth in one of claims 1 to 10.

18. A pattern feature correspondence apparatus, wherein, for a plurality of pattern features included in a pattern signal, the pattern feature correspondence apparatus detects a correspondence relation of the pattern features based on a relative relation of attributes of pattern features, the relative relation of attributes of pattern features being determined by the feature extraction apparatus as set forth in one of claims 11 to 16.

19. A pattern matching apparatus that performs pattern matching for first pattern signals and second pattern signals using a correspondence relation of pattern features,
the correspondence relation of pattern features being detected by the pattern feature correspondence apparatus according to claim 17 or 18.

20. A feature attribute calculation apparatus comprising:
a feature detection unit that detects a location and a facing direction of a pattern feature, which includes a texture feature, from an input pattern signal;
a direction detection unit that, for a point in the input pattern signal, detects a main direction of the point using peripheral pattern information on the point;
a stream line detection unit that, for each of the detected pattern features, detects a location and a facing direction of a stream line passing through the pattern feature using information on a location and a facing direction of the pattern feature and information on the main direction of each point in the input pattern signal; and
a stream line relation detection unit that, for each of the detected pattern features, finds a projection point of the pattern feature onto a stream line axis of another pattern feature wherein the pattern feature and a stream line passing through the pattern feature are set respectively as an origin and an axis of a local stream line coordinate system and that detects information on a location and a facing direction of the another pattern feature in the local stream line coordinate system as a stream line relation that forms an attribute of the pattern feature.

21. A pattern feature correspondence apparatus that obtains a stream line relation of a pattern feature by means of the feature attribute calculation apparatus according to claim 20, the pattern feature correspondence apparatus comprising:
a search feature storage unit that stores data group, each including a pattern feature that is a search feature and a stream line relation;
a file feature storage unit that stores data group, each including a pattern feature that is a file feature and a stream line relation; and
a pair checking unit that sequentially reads pattern feature data from the search feature storage unit and the file feature storage unit and compares relative locations and facing directions in relation to another pattern feature, which corresponds to the stream line relation, to detect pairs of pattern features from the pattern features stored in the search feature storage unit and the pattern features stored in the file feature storage unit.

22. A pattern matching apparatus that obtains a stream line relation of a pattern feature by means of the feature attribute calculation apparatus according to claim 20, the pattern matching apparatus comprising:
a search feature storage unit that stores data group, each including a pattern feature that is a search feature and a stream line relation;
a file feature storage unit that stores data group, each including a pattern feature that is a file feature and a stream line relation;
a pair checking unit that sequentially reads pattern feature data from the search feature storage unit and the file feature storage unit and compares relative locations and facing directions in relation to another pattern feature, which corresponds to the stream line relation, to detect pairs of pattern features from the pattern features stored in the search feature storage unit and the pattern features stored in the file feature storage unit;
a pair feature storage unit that stores data on the paired pattern features detected by the pair checking unit; and
a match checking unit that checks data on the paired pattern features stored in the pair feature storage unit, or data on the paired pattern features and the pattern feature data stored in the search feature storage unit and the file feature storage unit, to check if a pattern match occurs.

23. A feature attribute calculation method comprising:
a step of inputting a pattern signal and detecting a stream line in the pattern signal;
a step of setting a coordinate system (termed as a stream line coordinate system) corresponding to a direction of the stream line detected in the pattern signal; and
a step of obtaining an attribute of a pattern feature in the pattern signal based on the stream line coordinate system.

24. The feature attribute calculation method according to claim 23, wherein for a plurality of different points on the stream line in the pattern signal,
the step of setting a stream line coordinate system sets a plurality of local stream line coordinate systems and, using a collection of the plurality of local stream line coordinate systems, configures the stream line coordinate system.

25. The feature attribute calculation method according to claim 23, wherein the step of detecting a stream line repeatedly performs an operation, in which a predetermined amount of movement is made from a location of a predetermined pattern feature in the pattern signal into a facing direction of the stream, a facing direction at a new location is determined so that the facing direction at the new location is continuous with the facing direction of the stream at the location before the movement, and a predetermined amount of movement is made from the new location into the newly determined facing direction to determine a next facing direction, thereby determining a location and a direction of the stream line that passes through the predetermined pattern feature.

26. A pattern feature quantity calculation method comprising:
a feature detection step of detecting a location and a facing direction of a pattern feature, which is a texture feature, from an input pattern signal;
a direction detection step of, for a point in the input pattern signal, detecting a main direction of the point, using peripheral pattern information on the point;
a stream line detection step of, for each of the detected pattern features, detecting a location and a facing direction of a stream line passing through the pattern feature using information on a location and a facing direction of the pattern feature and information on the main direction of each point in the input pattern signal; and
a stream line relation detection step of, for each of the detected pattern features, setting the pattern feature and a stream line passing through the pattern feature respectively as an origin and an axis of a local stream line coordinate system, finding a projection point of the pattern feature onto a stream line axis of another pattern feature, and detecting information on a location and a facing direction of the another pattern feature in the local stream line coordinate system as a stream line relation that is an attribute of the pattern feature.

27. A program causing a computer to execute:
a processing that inputs a pattern signal and detects a stream line in the pattern signal;
a processing that sets a coordinate system (termed as a stream line coordinate system) corresponding to a direction of the stream line detected in the pattern signal; and
a processing that obtains an attribute of a pattern feature in the pattern signal based on the stream line coordinate system.
